Europäisches Patentamt

European Patent Office

Office européen des brevets

(19)

(11) Publication number: **0 039 126**
A2

(12)

# EUROPEAN PATENT APPLICATION

(21) Application number: 81301049.3

(22) Date of filing: 12.03.81

(51) Int. Cl.³: **C 08 J 3/10**
//C08L101/04, C09D3/727

(30) Priority: 28.03.80 GB 8010427

(43) Date of publication of application:
04.11.81 Bulletin 81/44

(84) Designated Contracting States:
BE DE FR GB IT NL

(71) Applicant: IMPERIAL CHEMICAL INDUSTRIES LIMITED
Imperial Chemical House Millbank
London SW1P 3JF(GB)

(72) Inventor: Burgess, Anthony Joseph
Hazeldine Top Road Five Crosses
Frodsham Cheshire(GB)

(74) Representative: Roberts, John Stanley et al,
IMPERIAL CHEMICAL INDUSTRIES LIMITED Legal
Department: Patents Thames House North Millbank
London SW1P 4QG(GB)

(54) Water-based chlorinated aliphatic polymer compositions and the preparation and use thereof.

(57) An aqueous latex of a chlorinated aliphatic polymer containing a plasticising additive in the solids phase of the latex. The latex may be prepared starting from a solution of the chlorinated polymer in an organic solvent (for example carbon tetrachloride) which also contains a plasticising additive; an emulsion in water is prepared from this solution and the organic solvent is then selectively removed by evaporation to yield the desired aqueous latex.

EP 0 039 126 A2

WATER-BASED CHLORINATED ALIPHATIC POLYMER
COMPOSITIONS AND THE PREPARATION AND USE
THEREOF

1.                    MD 31239 Er.

This invention relates to water-based chlorinated polymer compositions and more particularly
to aqueous latices of chlorinated aliphatic
polymers, the preparation thereof, and the use
thereof in paints and protective coatings.

Various chlorinated aliphatic polymers may be
used as binders in paints and protective coating
compositions, for example in paints for use in
the protective coating of metal substrates.  Such
paints and coating compositions are commonly
prepared by dissolving a solid chlorinated
polymer, in powder form, in an organic solvent
such as toluene, xylene, methylethyl ketone or
butyl acetate.  In some applications of such
paints and coating compositions it is desirable
to avoid the use of an organic solvent but a
satisfactory aqueous formulation is difficult to
achieve starting from the solid chlorinated
polymer.

According to the present invention there is
provided a process for preparing an aqueous latex
of a chlorinated aliphatic polymer which comprises:

(i)   preparing an emulsion in water of a solution
      of the chlorinated aliphatic polymer in an organic solvent capable of being selectively
removed from the emulsion by evaporation
and

(ii)    selectively evaporating the organic solvent
        from the emulsion to yield an aqueous latex
        of the chlorinated polymer,
characterized in that the solution from which the
emulsion is prepared contains a plasticizing
additive in such proportion that the minimum
film-forming temperature of the subsequently
produced aqueous latex is 40°C or below.

According to another aspect of the present
invention there is provided an aqueous latex of a
chlorinated aliphatic polymer characterised in
that the solids phase of the latex also contains
a plasticising additive in such proportion that
the minimum film-forming temperature of the latex
is 40°C or below.

The organic solvent capable of being selectively removed from the emulsion by evaporation
may be a solvent which (a) has a boiling-point
below 100°C (preferably 85°C or below) at atmospheric pressure and/or (b) forms an azeotrope
with water, which azeotrope contains a minor
proportion by weight of water and has a boiling-
point below 100°C (preferably 85°C or below).
Organic solvents which may conveniently be
employed include carbon tetrachloride, ethylene
chloride, methylene chloride, benzene and
toluene but it will be readily apparent that many
other organic solvents may be employed provided
that the chlorinated polymer concerned is soluble
therein and that the boiling-point requirements
are satisfied.

The process of the present invention is especially advantageous when the solution of the chlorinated polymer in an organic solvent (the solution from which the emulsion is prepared) is a solution obtained as the product of chlorination of an aliphatic polymer in solution in that solvent.

A process commonly employed for the chlorination of aliphatic polymers (for example natural rubber, polybutadiene or copolymers of butadiene, polyisoprene, polyethylene, polypropylene and ethylene/propylene copolymers) comprises introducing gaseous chlorine into a solution of the polymer in a chlorinated hydrocarbon solvent at an elevated temperature (for example at a temperature in the range 60°C to 120°C). Carbon tetrachloride is the solvent most commonly used.

The chlorinated polymer thus produced is usually isolated in solid form by treatment of the solution with steam or hot water, thereby distilling off all but a small residual proportion of the chlorinated hydrocarbon solvent employed in the chlorination process; the solid chlorinated polymer thus obtained is dried by conventional processes.

When the process of the present invention is applied to the solution obtained as the product of the chlorination of an aliphatic polymer in a chlorinated hydrocarbon solvent the steps of separation and subsequent drying of the solid chlorinated polymer are avoided; an aqueous latex of the chlorinated polymer is produced without intermediate separation of a solid product. If desired, part of the chlorinated hydrocarbon solvent may be removed by evaporation prior to the emulsification step, thereby increasing the solids content of the latex subsequently produced.

In another embodiment of the present invention the solution of the chlorinated polymer in an organic solvent may be a solution prepared by dissolving the solid chlorinated aliphatic polymer in particulate form in a suitable solvent; the chlorinated polymer may be, for example, a product of chlorination of one or more of the aliphatic polymers already mentioned.

The plasticizing additive incorporated in the solution of the chlorinated polymer may be selected from a wide range of materials recognized in the art as materials having a plasticizing effect. Various chemical types of plasticizing additive may be used and the suitability and optimum proportion of a particular additive may readily be determined by simple trial, the criteria being compatibility with the chlorinated polymer and fulfilment of the required minimum film-forming temperature of the aqueous latex. In general, suitable proportions of plasticising additive are for example in the range from 5 to 150 (especially from 20 to 100) parts by weight per hundred parts by weight of chlorinated polymer.

Plasticizing additives which may be used include the following:
chlorinated or sulphochlorinated paraffins, especially those having from 12 to 24 carbon atoms and containing at least 40% by weight of chlorine
alkylsulphonates of phenols
phthalates, for example di-(n-butyl) phthalate and di-(2-ethylhexyl) phthalate

adipates and sebacates, for example di-(n-octyl) adipate

phosphates, for example tricresyl phosphate citrates, for example acetyl tri-butyl citrate stearates and oleates, for example n-butyl stearate and n-butyl oleate

epoxidised oils, for example epoxidised soya bean oil

vegetable oils and polymerised derivatives thereof, for example linseed oil, dehydrated castor oil

aliphatic mono-carboxylic acids and alcohols having at least 8 carbon atoms (and esters or amides of the said acids), for example ethyl palmitate, n-dodecanol, lauric acid and the mixtures of long-chain alcohols sold as "Synprol" and "Repranol" (Trade Marks).

ethoxylates of primary aliphatic alcohols having at least 8 carbon atoms, preferably at least 12 carbon atoms, for example the alcohol ethoxylates sold under the Trade Mark "Synperonic".

acrylic resins, alkyd resins, hydrocarbon resins

The preparation of the emulsion in water of the solution of the chlorinated polymer in the organic solvent may be carried out by known techniques. Suitable emulsifying agents include anionic emulsifying agents, for example "Manoxol" OT (di-octyl sodium sulphosuccinate), non-ionic emulsifying agents and combinations thereof.

Emulsification may also be aided by modification of the chlorinated polymer to provide anionic sites (for example by sulphonation).

The concentration of emulsifying agent may be,

**0039126**

for example, from 0.1% to 10% (preferably from 1% to 8%) by weight based on the solids content of the emulsion. The particle size of the emulsion is preferably in the range from 0.1 to 5 microns.

The optimum conditions for selective evaporation of the organic solvent from the emulsion may readily be determined by simple trial. For example, when the solvent is carbon tetrachloride the selective evaporation may conveniently be carried out by heating the emulsion to 50°C and maintaining this temperature while partial vacuum is applied.

The plasticizing additive and the proportion thereof employed are preferably such that the minimum film-forming temperature of the resulting latex is 30°C or below; for many applications it is especially preferred that the minimum film-forming temperature is 25°C or below.

The solids content of the latex is conveniently in the range from 10% to 60% by weight but the preferred solids content will depend upon the particular application. The latex may be formulated as desired with conventional components of paints or coating compositions, for example pigments and thickening agents. In the formulation of paints for application by techniques such as brush, spray or roller the solids content of the final paint composition is preferably at least 25% by volume.

The latex may be used as the basis for a wide variety of paints and protective coating compositions, especially when steel is the substrate to be protected.

The invention is illustrated by the following Examples, in which parts and percentages are by weight unless otherwise stated.

EXAMPLE 1

An aqueous latex of a chlorinated rubber ("Alloprene" R10) was prepared as follows, using a chlorinated paraffin ("Cereclor" 42) as the plasticizing additive. ("Alloprene" and "Cereclor" are Trade Marks).

16.4 parts of "Cereclor" 42 were added to 100 parts of a 20% solution of "Alloprene" R10 in carbon tetrachloride. An equal weight of water containing 1% "Manoxol" OT as emulsifying agent was then added and the mixture was emulsified using a Silverson mixer to give a stable emulsion of particle size approximately 1 micron.

The carbon tetrachloride was selectively removed from the emulsion by application of low vacuum (with an air bleed) while the emulsion was maintained at 50°C. The product obtained after decantation from a small amount of sediment was a latex with solids content 25% and carbon tetrachloride content 0.5%.

The pH of the latex as prepared was 4. The pH was raised to 7.5 by addition of a few drops of concentrated ammonia solution to 100 grams of the latex and 1 g of "Methocell" J12 was added as thickener. When cast on to glass and allowed to dry at ambient temperature a tough clear film was produced.

. A paint was prepared by adding zinc phosphate and red iron oxide as pigments to another portion of the thickened latex. When cast on to glass and allowed to dry at ambient temperature a hard tough paint film was produced.

0039126

EXAMPLE 2

In this Example the plasticising additive was "Cloparten" Z, a sulphochlorinated paraffin.

13.9 parts of "Cloparten" Z was added to 100 parts of a 20% solution of "Alloprene" R10 chlorinated rubber in carbon tetrachloride. 48.2 parts of an aqueous solution containing 3% "Manoxol" OT and 1.5% "Synperonic" PE 39/70 were then added.

("Cloparten", "Alloprene", "Manoxol" and "Synperonic" are trade marks).

A few drops of 20% sodium hydroxide solution were added to make the mixture alkaline. The mixture was then emulsified using a Silverson mixer to give a stable emulsion of particle size approximately 1 micron.

The carbon tetrachloride was selectively removed from the emulsion by the application of low vacuum (with a nitrogen bleed); during this process the emulsion was initially heated to 35°C, the temperature being gradually increased to a maximum of 50°C.

Very little sediment (less than 1%) was obtained and the final product was a stable latex of solids content 61% and carbon tetrachloride content 0.5%. The pH of the latex as prepared was 7.2.

1 part of "Methocell" J12MS (trade mark) was added as thickener to 100 parts of the latex and solubilised with a few drops of concentrated ammonia. When cast onto glass and allowed to dry at ambient temperature, a clear tough film was produced. The minimum film-forming temperature was 17°C.

A primer paint was prepared by adding 36.3 parts of a millbase to 0.1 parts of "Bevaloid" 642 (trade mark) defoamer and 59.2 parts of the latex. The millbase consisted of 10.7 parts water, 0.1 parts "Bevaloid" 642, 0.2 parts "Methocell" JI2MS, 5.7 parts zinc phosphate, 16.3 parts micronised barytes, and 2.6 parts micronised red iron oxide.

A white topcoat paint was prepared using 24 parts latex, 3.5 parts "Tioxide" RCR2 (trade mark) 0.2 parts 0.88 ammonia, and 3.5 parts of water.

Both paints when allowed to dry produced tough paint films.

EXAMPLE 3

A solution was prepared of 8 parts of degraded polyisoprene rubber in 100 parts of carbon tetrachloride. Gaseous chlorine was passed into this solution at 68°C until the chlorine content of the polymer was 66%. Excess chlorine was removed from the solution by purging with nitrogen.

To 100 parts of this solution (containing approximately 24 parts of chlorinated rubber) were added 11 parts of "Cloparten" Z as plasticizer and 41.4 parts of an aqueous solution containing 3.2% "Manoxol" OT and 1.6% "Synperonic" PE 39/70 as emulsifying agents. A few drops of 20% sodium hydroxide solution were added to make the solution alkaline and the mixture was then emulsified to give a stable emulsion of particle size approximately 1 micron.

The carbon tetrachloride was selectively removed as described in Example 2; only a slight degree of sedimentation occurred. The product was a stable latex of solids content 54%.

The latex when cast on to glass formed a hard, tough film.

A primer paint was prepared from the latex by the method described in Example 2. This paint was applied by brush to shot-blasted steel panels and to mildly abraided steel panels; in both cases the paint dried to form a tough protective coating.

EXAMPLE 4

A solution prepared by dissolving 6.25 parts of liquid polybutadiene in 100 parts of carbon tetrachloride was chlorinated as described in Example 3 except that a small proportion of sulphur dioxide was introduced during the latter part of the chlorination. After removal of excess chlorine, hydrogen chloride and sulphur dioxide the chlorine content of the polymer solids was 64.7 % and the sulphur content was 0.1 %.

To 100 parts of this solution (containing 17.7 parts of chlorinated polymer) were added 13.3 parts 'Cereclor' 42 and 44.7 parts of an aqueous solution containing 2.7% 'Manoxol' OT and 1.4 %'Synperonic PE 39/70 as emulsifying agents. The soluton was then emulsified as described in Example 3.

The carbon tetrachloride was selectively removed as described in Example 2 to yield a latex containing 40% solids; the latex when cast on to glass formed a film at ambient temperature.

11.  MP 0039126

CLAIMS

1. An aqueous latex of a chlorinated aliphatic polymer, characterised in that the solids phase of the latex also contains a plasticising additive in such proportion that the minimum film-forming temperature of the latex is 40°C or below.

2. A process for preparing an aqueous latex according to Claim 1 comprising:

   (i)  preparing an emulsion in water of a solution of the chlorinated aliphatic polymer in an organic solvent capable of being selectively removed from the emulsion by evaporation and

   (ii) selectively evaporating the organic solvent from the emulsion to yield an aqueous latex of the chlorinated polymer,

   characterized in that the solution from which the emulsion is prepared contains a plasticising additive in such proportion that the minimum film-forming temperature of the subsequently produced aqueous latex is 40°C or below.

3. A process according to Claim 2 characterised in that the organic solvent is a solvent having a boiling-point below 100°C at atmospheric pressure.

4. A process according to Claim 3 characterised in that the organic solvent is a solvent having a boiling-point below 85°C at atmospheric pressure.

5.   A process according to Claim 4 characterised
     in that the organic solvent is carbon tetrachloride.

6.   A process according to any of Claims 2 to 5
     characterised in that the solution from which
     the emulsion is prepared is a solution
     obtained as the product of chlorination of an
     aliphatic polymer in solution in an organic
     solvent.

TD/ADM/470/A-13-14